# EUROPEAN PATENT SPECIFICATION

(11) **EP 4 404 155 B1**
(45) Date of publication and mention of the grant of the patent: **25.02.2026**
(21) Application number: 23152962.9
(22) Date of filing: 23.01.2023
(51) Int. Cl.: G06V 30/414, B42D 25/20, B42D 25/30, G06K 19/06, G06K 19/10, G06V 30/42, G06F 21/32

(54) **A METHOD FOR IMPROVED ID DOCUMENT DETECTION, CAPTURE AND SEGMENTATION USING A VISUAL REPRESENTATION**
VERFAHREN ZUR VERBESSERTEN ERKENNUNG, ERFASSUNG UND SEGMENTIERUNG VON ID-DOKUMENTEN MITHILFE EINER VISUELLEN DARSTELLUNG
PROCÉDÉ DE DÉTECTION, DE CAPTURE ET DE SEGMENTATION DE DOCUMENT D'IDENTIFICATION AMÉLIORÉES À L'AIDE D'UNE REPRÉSENTATION VISUELLE

(43) Date of publication of application: 24.07.2024
(73) Proprietor: IDEMIA Public Security France, 92400 Courbevoie (FR)
(72) Inventor: MAYER, Joseph, Wayne, NJ 07470 (US)
(74) Representative: IPS

(56) References cited:
- CA-A1- 2 931 469
- US-A1- 2017 200 247
- US-A1- 2018 033 020
- US-A1- 2019 012 558
- US-A1- 2019 070 887
- US-A1- 2020 265 417

## Description

### Technical field

The present invention generally relates to computer vision and more specifically to object detection in an identity document, such as an identity card or a driver's license or a passport, comprising a visual representation of encoded data. The invention also concerns a method for capturing a region-of-interest of an identity document, and a capturing device.

### Background

Identity control is sometimes required when a person accesses a protected area or an on-line service for example.

The control of identity documents such as passports, driver's licenses, identity cards and the like can be performed with the use of a mobile device whereby holders themselves can generate a digital image of their identity document or of a particular page of their document. In particular, when a user accesses an on-line service, she/he may need to take a photo of its identity document and eventually share it with a service provider. Understandably, the photos taken by the users using a mobile device, such as a smartphone, can have a range of issues in terms of illumination, focus, orientation, and background.

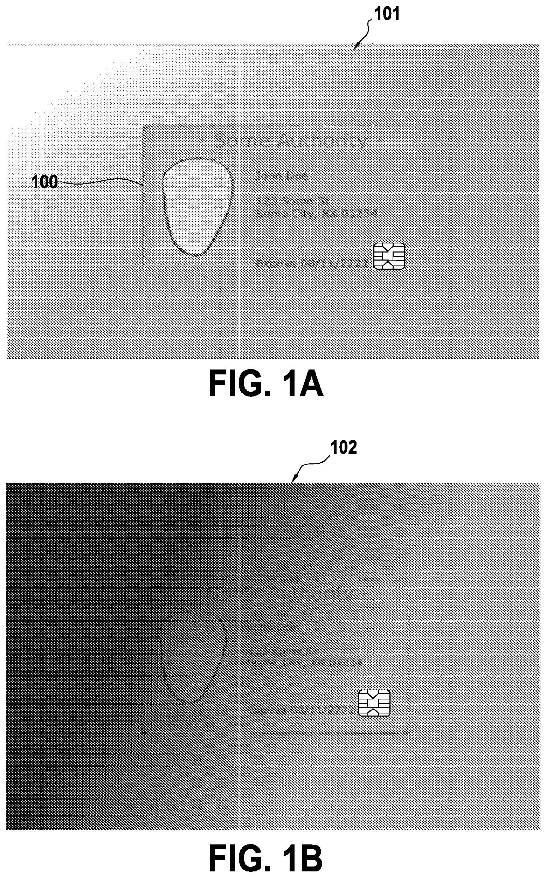

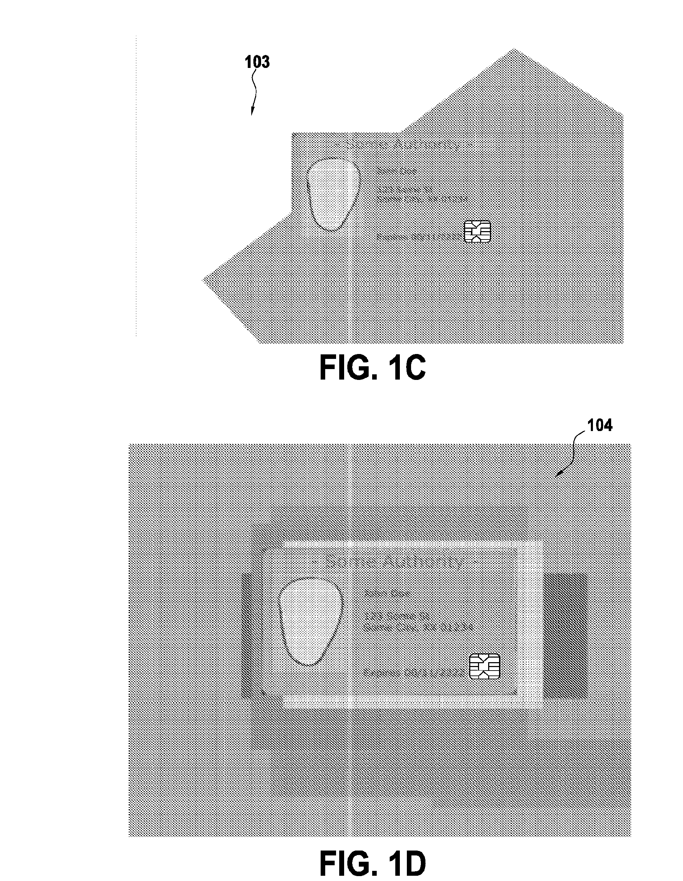

As illustrated by **Figures 1A to 1D****,** an identity document 100 can be captured in various environmental conditions. In the example 101 of Fig. 1A, the user may take a photo of an identity document 100 with relatively adequate but varying illumination. This is evidenced by the low contrast around the boundaries of the identity document. As illustrated by example 102 in Fig. 1B, the photo may be taken with varying illumination over the identity document such that a portion of the identification is in the shadow. In the example 103 of Fig. 1C, the identity document may be taken with portions of the boundaries almost indistinguishable from the immediately surrounding background. Example 104 in Fig. 1D illustrates a cluttered background, which confounds the detection of boundaries of the identity document.

Faced with the imperfections in photos taken by average consumers, the analysis of their content may fail due to noise in the photo, or due to the use of an unappropriated background when capturing the identity document. Specifically, approaches that rely on edge detection can fail when contrast is low between an object, such as an identity document, and its background.

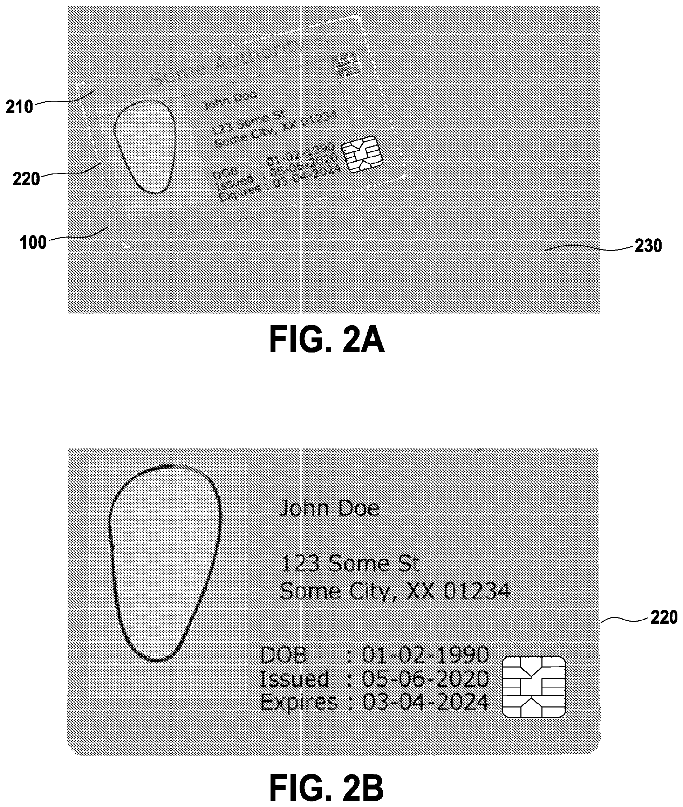

**Figures 2A and 2B** illustrate an example of an erroneous segmentation 220 of a digital image of an identity document 100. This identity document 100 comprises an area 210 characterizing the issuing authority of the identity document 100. Since the contrast is low between the background of the area 210 and the background 230 used when capturing the identity document 100, it results in an erroneous segmentation 220 of the image of the identity document 100, whereby the area 210 is not considered as a portion of the image to process. US 2019/070887 A1 discloses a security document and a method for the authentication thereof, wherein a first item of information is verified through the use of a second item of information. US2019/012558 A1 teaches a method for processing a structured personal document which synthesizes images comprising rendered text starting from a coded automatic reading zone and uses the images as templates for detecting regions of interest.

There is therefore generally a need for new identity document, a new method for capturing an identity document, and a new capturing device, where the location of an object (or a region-of-interest) within a digital image is determined in a precise and convenient manner, thereby improving check of the authenticity of the identity document.

### Summary

To this end, the present disclosure first provides an identity document comprising a visual representation of encoded data, the encoded data being data for determining location of at least a part of the outlines of a region-of-interest of the identity document relative to at least one reference point of the visual representation, the region-of-interest being different from the visual representation. The scope of protection is defined by the appended set of claims.

In one implementation, the visual representation of data is a one-dimensional, a two-dimensional barcode or a Machine Readable Zone (MRZ). The MRZ may be compliant with the OACI/ICAO 9303 and/or with the ISO/CEI 7501-1:2008 Standards.

In one implementation, dimensions of the region-of-interest correspond to dimensions of an entire side of the identity document.

According to a second aspect, the present disclosure concerns an identity document comprising a visual representation of encoded data, the encoded data being data for determining dimensions of a region-of-interest of the identity document, the region-of-interest being different from the visual representation.

According to a third aspect, the present disclosure provides a computer-implemented method for processing a region-of-interest of an identity document, the method being implemented by a capturing device and comprising:
- obtaining a digital image of the identity document;
- detecting a visual representation of encoded data, the visual representation being displayed on the identity document;
- decoding data encoded by the visual representation;
- determining a location of at least a part of outlines of a region-of-interest of the identity document as a function of the decoded data, the region-of-interest being different from the visual representation; and,
- processing the region-of-interest.

This method offers the advantage of precisely determine location of outlines of a region-of-interest of this identity document, and this even if the digital image has issues in terms of illumination, focus, orientation, and/or background.

In one implementation, the location of at least parts of the outlines is determined relative to at least one reference point of the visual representation.

In one implementation, the encoded data includes a reference to a predetermined format, and the determining step comprises:
- transmitting a request to a remote server for obtaining dimensions of the region-of-interest and data for determining a location of the region-of-interest relatively to at least one reference point of the visual representation, the request comprising the reference encoded in the visual representation;
- receiving, from the remote server, dimensions of the region-of-interest and data for determining the location of the region-of-interest relatively to at least one reference point of the visual representation; and,
- locating the region-of-interest in the obtained digital image, as a function of the received dimensions and of the relative location.

In one implementation, the encoded data includes dimensions of the region-of-interest and data for determining a location of the region-of-interest relative to at least one reference point of the visual representation, and the location of the outlines of the region-of-interest is determined as a function of the dimensions and of the relative location.

In one implementation, the region-of-interest and the visual representation are rectangular and get parallel outlines, and the encoded data comprises:
- dimensions of the visual representation;
- a distance between each outline of the region-of-interest and at least one reference point of the visual representation ;
- and the location of the outlines of the region-of-interest is determined as a function of the dimensions and of the relative distances.

In one implementation, the encoded data comprises dimensions of the visual representation, and the method further comprises determining resolution of the visual representation as a function of the dimensions and of a detected pixel dimension.

In one implementation, the processing step comprises storing the region-of-interest in an electronic card wallet.

In one implementation, the processing step comprises determining whether the identity document is a genuine copy or not by segmenting at least a part of the region-of-interest.

In one implementation, the processing step comprises determining whether the person attempting to enroll is the holder of the identity document or not by:
- collecting a biometric from the holder of the identity document; and,
- comparing the collected biometric with a digital version of the biometric stored in an embedded electronic microprocessor chip of the identity document, or with a version displayed on the identity document.

In one implementation, collecting a biometric comprises at least one of :
- requesting the person to capture the person's own face using a camera of the capturing device;
- prompting the person to press his or her fingertip(s) on a sensor of the capturing device, so that a fingerprint of at least one of the fingers can be captured; or,
- performing a retina scan by prompting the person to stare into an iris, retina, or eye-scanning device.

In one implementation, the processing step comprises determining whether the person attempting to enroll is the holder of the identity document or not by:
- configuring a touchscreen of the capturing device to capture a signature;
- requesting the person to execute the person's signature on the touchscreen; and,
- comparing the signature freshly executed with a digital version of the signature previously stored in an electronic microprocessor chip of the identity document or displayed on the identity document.

In one implementation, the processing step comprises:
- determining whether the person attempting to enroll is the holder of the identity document; and if so,
- generating a certified electronic version of the individual's identity document.

A further aspect of the disclosure concerns a device for capturing an identity document and comprising a camera for capturing images, at least one processor, and a memory containing a program implementing a method for processing a region-of-interest of an identity document, the method comprising:
- obtaining a digital image of the identity document;
- detecting a visual representation of encoded data, the visual representation being displayed on the identity document;
- decoding data encoded by the visual representation;
- determining a location of at least a part of the outlines of a region-of-interest of the identity document, as a function of the decoded data, the region-of-interest being different from the visual representation; and,
- processing the region-of-interest.

Embodiments of the present disclosure also extend to programs which, when run on a computer or processor, cause the computer or processor to carry out the method described above or which, when loaded into a programmable device, cause that device to become the device described above. The program may be provided by itself, or carried by a carrier medium. The carrier medium may be a storage or recording medium, or it may be a transmission medium such as a signal. A program embodying the present disclosure may be transitory or non-transitory.

### Brief description of the drawings

**Figures 1A to 1D** illustrate various examples of environmental conditions when capturing an identity document.
**Figures 2A and 2B** illustrate an example of performing an erroneous segmentation of an identity document, when capturing an identity document according to one of the environmental conditions illustrated by Fig. 1.
**Figure 3** depicts for illustrative purposes a system in which the disclosure is applicable.
**Figure 4** illustrates a particular embodiment of a capturing device 400 according to the disclosure.
**Figure 5** illustrates an example of the hardware architecture of the capturing device 400 for the implementation of the capturing method illustrated by Figure 7.
**Figure 6** illustrates an example of identity document 600 according to an embodiment of the disclosure.
**Figure 7** is a flowchart of a capturing method executed by a capturing device 400 according to an embodiment of the disclosure.

### Detailed description

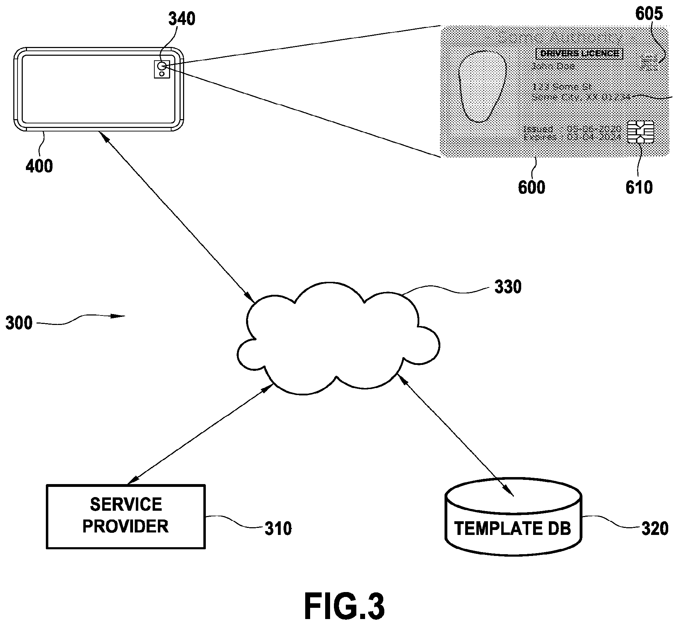

**Figure 3** depicts for illustrative purposes a system 300 in which the disclosure is applicable.

### The capturing device 400

The system 300 comprises a capturing device 400 for capturing an image of an identity document 600. The capturing device 400 may be a mobile phone, a personal digital assistant, a portable electronic device, a tablet computer or any other electronic device capable of capturing an image. To that end, the capturing device 400 is typically equipped with a camera 340, a screen or a touchscreen to display captured images and videos, and a capturing user interface. The capturing user interface may be implemented through a dedicated mobile application.

The mobile application captures and stores a digital image of an identity document 600 first.

### The identity document 600

The identity document 600 may be a physical identity document, such as a driver's license, a passport, an identity card, a birth certificate, a visa, a permanent resident card, a social security card, a Medicare/Medicaid card, a military ID card, and the like. The term "identity document" according to the invention may encompass any government-issued credentials that can be used to assert an identity claim, depending on the purpose and context. In a variant, the document may also be issued for secure access, rewards programs or general identification purposes.

It may contain the full name, parents' names, age, date and place of birth, sex, address, profession, nationality as well as other biographic information, and additional electronic biometric data such as fingerprints or minutiae, photographs, and face, hand, or iris measurements.

The identity document 600 of the disclosure also comprises a visual representation 605 of encoded data which is printed on or inserted in a layer of this identity document. In an embodiment, the encoded data allows the capturing device to determine location of at least a part of the outlines of a region-of-interest of this identity document relative to at least one reference point of the visual representation. In an alternative, the encoded data allows the capturing device to determine dimensions of a region-of-interest of said identity document.

In some implementation, the visual representation 605 of data is a one-dimensional barcode, e.g., a barcode that is made up of lines and spaces of various widths, or a two-dimensional barcode, such as a quick response (QR) code, an Aztec code or a PDF417 code. In a variant, the visual representation 605 of data is a Machine Readable Zone (MRZ). The MRZ may be compliant with the OACI/ICAO 9303 or with the ISO/CEI 7501-1:2008 Standards.

The visual representation 605 should be located and have a size so that it can be easily detected by a capturing device, for example, a size of 10 x 10 mm for an identity document having a size of 125 × 88 mm.

### The captured image

The camera 340 of the capturing device 400 is utilized to capture an image of this identity document. In particular, the camera may generate a high resolution image of this document so as to process a region-of-interest of that identity document.

In some implementations, the region-of-interest corresponds to a portion of a side of the identity document.

In other implementations, dimensions of the region-of-interest correspond to dimensions of an entire side of the identity document. In that case, the processing may comprise the storage of a digital image of an entire side of the identity document in a dedicated application, such as an electronic card wallet, of the capturing device 400. The storage of an image of an identity document in a capturing device, such as a mobile phone, offers the advantage for a person to store all its important documents, and in particular its identity documents, at one safe place, and to easily organize and eventually share these documents.

To avoid segmentation errors of the identity document due to illumination, focus, orientation, and/or background issues, the mobile application is configured to search for a visual representation 605 that could allow this mobile application to precisely determine outlines of the identity document 600.

In some implementations, the visual representation 605 encodes a reference to a format (e.g., ID-000, ID-1, ID-2, ID-3), and further data for determining locations of the outlines are stored in a remote database 320. In that case, the mobile application may be configured to access the remote database 320 once the reference to a format is obtained from the decoding of the visual representation 605.

The remote database 320 may then comprise an association table associating to each of a plurality of references to a format, dimensions of the region-of-interest and data for determining a location of said region-of-interest relatively to the visual representation. Thanks to that information, the mobile application is able to precisely determine the outlines of the region-of-interest, and then to scan and store the portion of the image defined by said outlines (and named "region-of-interest" in the following), even if the initial photo of the identity document 600 was taken under non-optimal environmental conditions.

In an alternative, the visual representation 605 directly encodes dimensions of the region-of-interest and data for determining a location of said region-of-interest relatively to the visual representation.

In some implementations, the capturing device may be configured to share an image of the region-of-interest with a service provider 310, using a communication network 330. Examples of communication networks 330 include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n/ac/ax, all or a portion of the Internet, or a combination of communication networks. The communication network 330 can communicate with, for example, Internet Protocol (IP) packets, Frame Relay frames, Asynchronous Transfer Mode (ATM) cells, voice, video, data, or other information between networks addresses.

In some implementations, the capturing device 400 may also be configured to determine whether the identity document 600 is a genuine copy as issued by an issuing agency. To verify whether an identity document is authentic, the device may identify features of the identity document (more precisely of the region-of-interest of this identity document) and then verify that certain security features (such as an hologram, UV image, micro-printing, laser perforation) and personalization fonts are correctly placed on the identity document. In an alternative, this verification may be directly implemented by the service provider 310.

In some implementations, the identity document 400 carries information about the biometrics of the holder, and this information is stored in an embedded electronic microprocessor chip 610. In that case, when the underlying identity document has been authenticated as a genuine copy, the capturing device may also be configured to rely on this identity document to validate that the person attempting to enroll is the holder of the identity document. In that case, the capturing device is further configured to collect a biometric from the holder of the identity document, and to compare it with a digital version of the biometric stored in the embedded electronic microprocessor chip 610 or with a version of the biometric displayed on the identity document.

In some implementations, the mobile application may request the person to capture its face using the camera 340 of the capturing device. In other implementations, the mobile application of the capturing device may prompt the person to press his or her fingertip(s) on the touchscreen of the capturing device, so that a fingerprint of at least one of the fingers can be captured. In still other implementations, the capturing device may perform a retina scan by prompting the person to stare into an iris, retina, or eye-scanning device.

Some implementations may rely on the person's signature. In these implementations, the mobile application may configure the touchscreen of the capturing device to capture a signature freshly executed by the person and then compare the lively captured signature with a digital version of the signature previously stored in the electronic microprocessor chip 610 of the identity document 600.

If the person is validated as the holder of the identity document, the mobile application may then generate a mobile ID for the individual, such as an electronic version of the individual's driver's license.

In an alternative, the validation that the person attempting to enroll is the holder of the identity document may be directly implemented by the service provider 310.

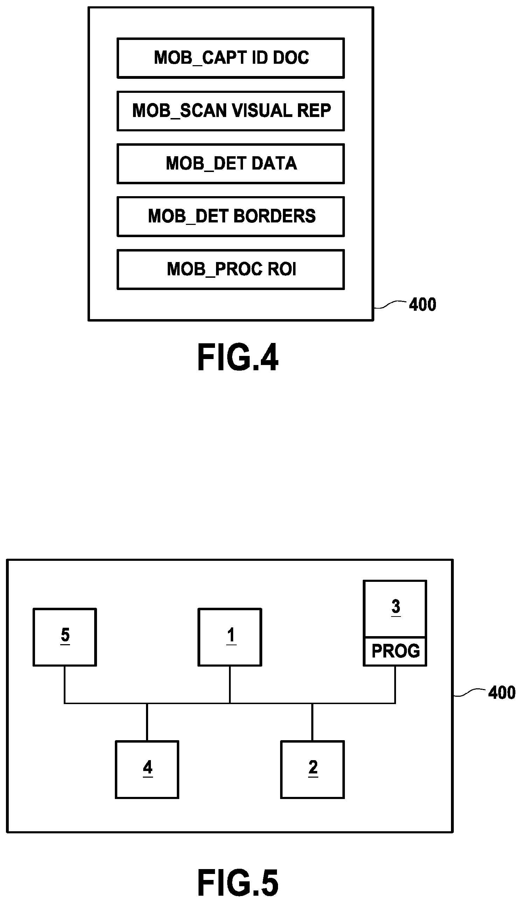

**Figure 4** illustrates a particular embodiment of a capturing device 400 according to the disclosure. Said capturing device 400 is configured to capture an image of this identity document 600 and then to determine and process a region-of-interest of this capturing device, by implementing a capturing method according to the disclosure.

**Figure 5** illustrates an example of the hardware architecture of the capturing device 400 for the implementation of the capturing method according to the disclosure.

To this end, the capturing device 400 has the hardware architecture of a computer. As shown in Figure 5, the capturing device 400 comprises a processor 1. Although illustrated as a single processor 1, two or more processors can be used according to particular needs, desires, or particular implementations of the capturing device 400. Generally, the processor 1 executes instructions and manipulates data to perform the operations of the device 400 and any algorithms, methods, functions, processes, flows, and procedures as described in the present disclosure.

The capturing device 400 also comprises communication means 5. Although illustrated as a single communication means 5 in Fig. 5, two or more communication means can be used according to particular needs, desires, or particular implementations of the capturing device 400. The communication means are used by the device 400 for communicating with another computing system that is communicatively linked to the communication network 330 in a distributed environment. Generally, the communication means 5 are operable to communicate with the network 330 and comprises logic encoded in software, hardware, or a combination of software and hardware. More specifically, the communication means 5 can comprise software supporting one or more communication protocols associated with communications such that the network 330 or interface's hardware is operable to communicate physical signals within and outside of the illustrated device 400.

The capturing device 400 also comprises a random access memory 2, a read-only memory 3, and a non-volatile memory 4. The read-only memory 3 of the capturing device 400 constitutes a recording medium conforming to the invention, which is readable by processor 1 and on which is recorded a computer program PROG conforming to the invention, containing instructions for carrying out the steps of the capturing method according to the invention.

The program PROG defines functional modules of the capturing device 400, which are based on or control the aforementioned elements 1 to 5 of the capturing device 400, and which comprise in particular a module MOD_CAPT for capturing a document, a module MOD_SCAN for searching for a visual representation in a capture, a module MOD_DEC for decoding data encoded in the visual representation 405, a module MOD_DET for determining outlines of a region-of-interest of the identity document, and a module MOD_PROC for processing the region-of-interest.

The functionalities attached to each of the modules are explained in detail hereafter.

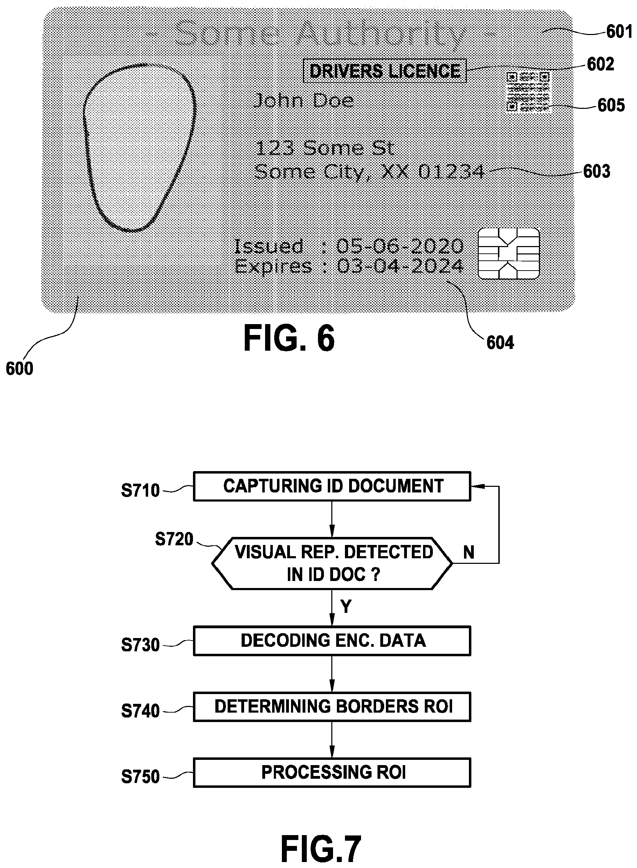

**Figure 6** illustrates an example of identity document 600 according to an embodiment of the disclosure.

As described above, the identity document 600 may be a physical identity document, such as a driver's license, a passport, an identity card, a birth certificate, a visa, a permanent resident card, a social security card, a Medicare/Medicaid card, a military ID card, and the like. In a variant, the document may also be issued for secure access, rewards programs or general identification purposes.

As illustrated by Figure 6, a first area yields recognized text 601. Text 601 points the issuing authority of the identity document 600. A second area shows recognized text 602 that corresponds to the document title of the identity document (i.e., U.S. Passport, drivers licence, identity card, etc.). A third area shows recognized text 603 that corresponds to the personally identifiable information (PII) of the holder of the identity document. Text 603 can also include the address information of the holder. A fourth area shows text 604 that corresponds to an issued date and an expiration date of the identity document. Additional areas can yield further textual information, such as the parents' names, age, date and place of birth, sex, address, profession, nationality as well as other biographic information. The identity document 600 may also comprise security features (such as an hologram, UV image, micro-printing, laser perforation) and personalization fonts.

In some implementation, the identity document comprises an embedded electronic microprocessor chip 610, which stores electronic biometric data such as fingerprints, a digital image of the face of the holders, and hand and/or iris measurements.

The identity document 600 of the invention also comprises a visual representation 605 of encoded data which is printed on or inserted in a layer of this identification document. The encoded data allows the capturing device to determine location of at least a part of outlines of a region-of-interest of this identity document relatively at least one reference point of the visual representation. In an alternative, the encoded data allows the capturing device to determine dimensions of a region-of-interest of said identity document.

In some implementation, the visual representation 605 of data is a one-dimensional barcode, e.g., a barcode that is made up of lines and spaces of various widths, or a two-dimensional barcode, such as a quick response (QR) code, an Aztec code or a PDF417 code.

**Figure 7** is a flowchart of a capturing method executed by a capturing device 400 according to an embodiment of the disclosure.

As shown on Figure 7, the capturing method comprises a first step S710 of obtaining a capture or capturing an identity document 600. This capturing step S710 is performed by the module MOD_CAPT and the camera 340 equipping the capturing device 600. In an alternative, the digital image of an identity document is captured from a remote device and received by the communication means 5 of the capturing device.

The capturing method also comprises a step S720 of verifying whether the captured image comprises or not a visual representation 605. As described above, the visual representation 605 of encoded data may be printed on or inserted in a layer of this identity document. In some implementation, the visual representation 605 of data is a one-dimensional barcode, e.g., a barcode that is made up of lines and spaces of various widths. In a variant, the visual representation 605 of data is a two-dimensional barcode, such as a quick response (QR) code, an Aztec code or a PDF417 code. This detecting step S720 is performed by the module MOD_SCAN.

While no visual representation is detected, the algorithm loops and goes back to step S710 (arrow referenced "N"). Once a visual representation is detected (arrow referenced "Y"), a step S730 of decoding the data encoded by the visual representation 605 is performed by the module MOD_DEC equipping the capturing device 600.

As an alternative, if a visual representation cannot be detected, the identity document is processed using legacy techniques. This alternative offers the advantage of supporting the existence of older non-conformant documents in circulation.

As described hereinafter, in some implementations, the visual representation 605 encodes a reference to a format (e.g., ID-000, ID-1, ID-2, ID-3), and the decoding results in obtaining said reference. In other implementations, the visual representation 605 directly encodes the dimensions of the region-of-interest and data for determining a location of said region-of-interest relatively to the visual representation, and the decoding results in obtaining said dimensions and said data.

The capturing method also comprises a step S740 of determining location of at least a part of the outlines of a region-of-interest of the identity document.

In implementations where the visual representation 605 encodes a reference to a format (e.g., ID-000, ID-1, ID-2, ID-3), dimensions of a region-of-interest and data for determining a location of said region-of-interest relatively to the visual representation are further stored in a database 320 associated to a remote server. In that case, step S750 comprises:
- transmitting a request to the server for obtaining dimensions of the region-of-interest and data for determining a location of the region-of-interest relatively to at least one reference point of the visual representation, the request comprising the reference encoded in the visual representation;
- receiving, from this server, dimensions of the region-of-interest and data for determining a location of said region-of-interest relatively to at least one reference point of the visual representation. In some implementation, the data for determining a location of said region-of-interest comprises a distance between a point of this region-of-interest and a reference point of the visual representation 605. In some implementation, the reference point corresponds to the top-left pixel of the visual representation 605, or to the barycenter of the visual representation 605.
- locating said region-of-interest in the obtained digital image, as a function of the received dimensions and of the relative location.

In a variant, the visual representation 605 encodes a reference to a format, and a correspondence between the format and dimensions associated to that format are stored in a memory of the capturing device.

In other implementations the visual representation 605 directly encodes the dimensions of the region-of-interest and data for determining a location of said region-of-interest relatively to at least one reference point of the visual representation. Likewise, the data for determining a location of said region-of-interest may comprise a distance between a point of this region-of-interest and a reference point of the visual representation 605, and the reference point may correspond to the top-left pixel of the visual representation 605, or to the barycenter of the visual representation 605.

In other implementations, the region-of-interest and the visual representation are rectangular and get parallel outlines, and the encoded data comprises:
- dimensions of the visual representation; and
- a distance between at least some of the outline of the region-of-interest and at least one reference point of the visual representation.
In that case, the location of the outlines of the region-of-interest is determined as a function of said dimensions and of the relative distances.

As an example, let us consider the case where the visual representation is a QR code, and the capturing device comprises a QR code reader. At step S720, the capturing device detects the boundaries of the QR code (named "QR rectangle" in the following) in the image obtained at step S710, and decodes the payload encoded in the QR code at step 730. The QR code encodes the following information:
- the QR code is is 0.5inch x 0.5inch;
- the left side of the region-of-interest is 1.5inch to the left of the QR code;
- the top of the region-of-interest is 1.2inch above the top of the code;
- this is an ID1 format region-of-interest.

A possible implementation of step S740 may be as follows:
- first, the DPI resolution (DPlcard) of the identity document in the captured image is computed as DPlcard = width of QR code / 0.5inch ;
- then, the location of the left outline of the region-of-interest may be then determined by shifting the left side of the QR rectangle to the left by (1.5inch * DPlcard);
- the top edge of the region-of-interest may be then determined by shifting the top edge of the QR rectangle upwards by (1.2inch * DPlcard);
- finally, the Right and Bottom outlines of the region-of-interest can be determined since the top and left locations are known, and since it is known (rather by requesting a remote database or by accessing a locally stored correspondence table) that ID1 is (3.37inch * DPlcard) wide and (2.125inch * DPlcard) tall.

In an implementation, the visual representation is a rectangle and the four corners of the visual representation and the relative position information stored in the code are used to generate a Source and Target set of four points. An homography transform is then applied that allows rendering of the region-of-interest in the captured image to a standard flattened format.

Finally, the capturing method comprises a step S750 of processing the region-of-interest.

In some implementations, the region-of-interest corresponds to the entire identity document, and the processing step may then comprise storing the digital image of the entire identity document in a dedicated application, such as an electronic card wallet, of the capturing device 400.

The storage of an image of an identity document in a capturing device, such as a mobile phone, offers the advantage for a person to store all its important documents, and in particular its identity documents, at one safe place, and to easily organize and eventually share these documents.

In some implementations, the processing step may comprise determining whether the identity document 600 is a genuine copy as issued by an issuing agency. To verify whether an identity document is authentic, the method comprises identifying features of the identity document (more precisely of the region-of-interest of this identity document) and then verify that certain security features (such as an hologram, UV image, micro-printing, laser perforation) and personalization fonts are correctly placed on the identity document. The step of verifying certain security features may also comprise a sub-step extracting features by applying an optical character recognition method on at least portions of the region-of-interest.

In some implementations, if the underlying identity document has been authenticated as a genuine copy, the processing step may comprise checking whether the person attempting to enroll is the holder of the identity document or not. In that case, the processing step comprises :
- a sub-step of collect a biometric from the holder of the identity document, and
- a sub-step of comparing it with a digital version of the biometric stored in the embedded electronic microprocessor chip 610.

In some implementations, the sub-step of collect a biometric may comprise at least one of :
- requesting the person to capture its face using the camera 340 of the capturing device ;
- prompting the person to press his or her fingertip(s) on the touchscreen of the capturing device, so that a fingerprint of at least one of the fingers can be captured.
- performing a retina scan by prompting the person to stare into an iris, retina, or eye-scanning device.

Some implementations the step of checking whether the person attempting to enroll is the holder of the identity document or not may rely on the person's signature. In these implementations, the method may comprise:
- configuring the touchscreen of the capturing device to capture a signature;
- requesting the person to execute its signature on the touchscreen;
- comparing the signature freshly executed with a digital version of the signature previously stored in the electronic microprocessor chip 610 of the identity document 600.

In some implementations, if the person is validated as the holder of the identity document, the method further comprises a step of generating a mobile ID for the individual, such as a certified electronic version of the individual's identity document.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable computer-storage medium for execution by, or to control the operation of, data processing apparatus. Alternatively, or additionally, the program instructions can be encoded in/on an artificially generated propagated signal, for example, a machine-generated electrical, optical, or electromagnetic signal that is generated to encode information for transmission to a receiver apparatus for execution by a data processing apparatus. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and apparatus can also be implemented as, special purpose logic circuitry, for example, a CPU, an FPGA, or an ASIC.

Non-transitory computer-readable media for storing computer program instructions and data can include all forms of media and memory devices, magnetic devices, magneto optical disks, and optical memory device. Memory devices include semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices. The processor and the memory can be supplemented by, or incorporated in, special purpose logic circuitry.

While this specification contains many specific implementation details, these should not be construed as limitations on the scope of what can be claimed, but rather as descriptions of features that can be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. An identity document (600) comprising a visual representation (605) of encoded data, the encoded data being data for determining a location of at least a part of the outlines of a region-of-interest of the identity document relative to at least one reference point of the visual representation, the region-of-interest being different from the visual representation, **characterised in that** the data for determining a location of said region-of-interest comprise a distance between a point of this region-of-interest and the reference point of the visual representation (605), especially the reference point correspond to the top-left pixel of the visual representation (605), or to the barycenter of the visual representation (605).

2. The identity document according to Claim 1, wherein the visual representation (605) of data is a one-dimensional, a two-dimensional barcode or a Machine Readable Zone.

3. The identity document according to Claim 1, wherein dimensions of the region-of-interest correspond to dimensions of an entire side of the identity document (600).

4. An identity document comprising a visual representation (605) of encoded data, the encoded data being data for determining dimensions of a region-of-interest of the identity document (600), the region-of-interest being different from the visual representation, **characterised in that** the data for determining a location of said region-of-interest comprise a distance between a point of this region-of-interest and the reference point of the visual representation (605), especially the reference point correspond to the top-left pixel of the visual representation (605), or to the barycenter of the visual representation (605).

5. A computer-implemented method for processing a region-of-interest of an identity document, the method being implemented by a capturing device and comprising:
- obtaining (S710) a digital image of the identity document;
- detecting (S720) a visual representation of encoded data, the visual representation being displayed on the identity document;
- decoding (S730) data encoded by the visual representation;
- determining (S740) a location of at least a part of the outlines of a region-of-interest of the identity document, as a function of the decoded data, the region-of-interest being different from the visual representation; and,
- processing (S750) the region-of-interest
wherein the encoded data includes dimensions of the region-of-interest and data for determining a location of the region-of-interest relative to at least one reference point of the visual representation (605), wherein the location of the at least parts of the outlines of the region-of-interest is determined as a function of the dimensions and of the relative location.

6. The method according to Claim 5, wherein the location of at least parts of the outlines is determined relative to at least one reference point of the visual representation (605).

7. The method according to Claim 5, wherein the encoded data includes a reference to a predetermined format, and the determining step comprises:
- transmitting a request to a remote server for obtaining dimensions of the region-of-interest and data for determining a location of the region-of-interest relatively to at least one reference point of the visual representation (605), the request comprising the reference encoded in the visual representation;
- receiving, from the remote server, dimensions of the region-of-interest and data for determining the location of the region-of-interest relatively to at least one reference point of the visual representation (605) ; and,
- locating the region-of-interest in the obtained digital image, as a function of the received dimensions and of the relative location.

8. The method according to Claim 5,
wherein the region-of-interest and the visual representation (605) are rectangular and get parallel outlines, wherein the encoded data comprises:
- dimensions of the visual representation;
- a distance between each outline of the region-of-interest and at least one reference point of the visual representation ;
wherein the location of the at least parts of the outlines of the region-of-interest is determined as a function of the dimensions and of the relative distances.

9. The method of Claim 5, wherein the encoded data comprises dimensions of the visual representation (605), the method further comprising determining resolution of the visual representation as a function of the dimensions and of a detected pixel dimension.

10. The method of Claim 5, wherein the processing step (S750) comprises storing the region-of-interest in an electronic card wallet.

11. The method of Claim 5, wherein the processing step (S750) comprises determining whether the identity document is a genuine copy or not by segmenting at least a part of the region-of-interest.

12. The method of Claim 5, wherein the processing step (S750) comprises determining whether the person attempting to enroll is the holder of the identity document or not by:
- collecting a biometric from the holder of the identity document; and,
- comparing the collected biometric with a digital version of the biometric stored in an embedded electronic microprocessor chip of the identity document, or with a version displayed on the identity document.

13. The method of Claim 12, wherein collecting a biometric comprises at least one of :
- requesting the person to capture the person's own face using a camera of the capturing device;
- prompting the person to press his or her fingertip on a sensor of the capturing device, so that a fingerprint of at least one of the fingers can be captured; or
- performing a retina scan by prompting the person to stare into an iris, retina, or eye-scanning device.

14. The method of Claim 5, wherein the processing step (S750) comprises determining whether the person attempting to enroll is the holder of the identity document or not by:
- configuring a touchscreen of the capturing device to capture a signature;
- requesting the person to execute the person's signature on the touchscreen; and,
- comparing the signature freshly executed with a digital version of the signature previously stored in an electronic microprocessor chip of the identity document or displayed on the identity document.

15. The method of Claim 5, wherein the processing step (S750) comprises:
- determining whether the person attempting to enroll is the holder of the identity document; and if so,
- generating a certified electronic version of the individual's identity document.

16. A device for capturing an identity document (600) and comprising:
- a camera for capturing images;
- at least one processor; and
- a memory containing a program implementing a method for processing a region-of-interest of an identity document, the method comprising:
- obtaining (S710) a digital image of the identity document;
- detecting (S720) a visual representation of encoded data, the visual representation being displayed on the identity document;
- decoding (S730) data encoded by the visual representation;
- determining (S740) a location of at least a part of the outlines of a region-of-interest of the identity document, as a function of the decoded data, the region-of-interest being different from the visual representation; and,
- processing (S750) the region-of-interest;
wherein the encoded data includes dimensions of the region-of-interest and data for determining a location of the region-of-interest relative to at least one reference point of the visual representation (605), wherein the location of the at least parts of the outlines of the region-of-interest is determined as a function of the dimensions and of the relative location.

17. A computer program which on execution by an apparatus causes the apparatus to execute a method for processing a region-of-interest of an identity document, the method comprising:
- obtaining (S710) a digital image of the identity document;
- detecting (S720) a visual representation of encoded data, the visual representation being displayed on the identity document;
- decoding (S730) data encoded by the visual representation;
- determining (S740) a location of at least a part of the outlines of a region-of-interest of the identity document, as a function of the decoded data, the region-of-interest being different from the visual representation; and,
- processing (S750) the region-of-interest;
wherein the encoded data includes dimensions of the region-of-interest and data for determining a location of the region-of-interest relative to at least one reference point of the visual representation (605), wherein the location of the at least parts of the outlines of the region-of-interest is determined as a function of the dimensions and of the relative location.

18. A non-transitory computer-readable medium storing a program which, when executed by a microprocessor or computer system, causes the microprocessor or computer system to perform a method for processing a region-of-interest of an identity document, the method comprising:
- obtaining (S710) a digital image of the identity document;
- detecting (S720) a visual representation of encoded data, the visual representation being displayed on the identity document;
- decoding (S730) data encoded by the visual representation;
- determining (S740) a location of at least a part of the outlines of a region-of-interest of the identity document, as a function of the decoded data, the region-of-interest being different from the visual representation; and,
- processing (S750) the region-of-interest
wherein the encoded data includes dimensions of the region-of-interest and data for determining a location of the region-of-interest relative to at least one reference point of the visual representation (605), wherein the location of the at least parts of the outlines of the region-of-interest is determined as a function of the dimensions and of the relative location.

## Patentansprüche

1. Ein Identitätsdokument (600), das eine visuelle Darstellung (605) von codierten Daten umfasst, wobei die codierten Daten Daten zur Bestimmung eines Standorts von mindestens einem Teils der Umrisse eines interessierenden Bereichs des Identitätsdokuments relativ zu mindestens einem Referenzpunkt der visuellen Darstellung zu bestimmen, wobei sich der interessierende Bereich von der visuellen Darstellung unterscheidet, **dadurch gekennzeichnet, dass** die Daten zum Bestimmen eines Ortes des interessierenden Bereichs einen Abstand zwischen einem Punkt dieses interessierenden Bereichs und dem Referenzpunkt der visuellen Darstellung (605) umfassen, insbesondere den Bezugspunkt dem Pixel oben links der visuellen Darstellung (605) oder dem Schwerpunkt der visuellen Darstellung (605) entspricht.

2. Das Identitätsdokument gemäß Anspruch 1, wobei die visuelle Darstellung (605) der Daten ein eindimensionaler, ein zweidimensionaler Barcode oder ein maschinenlesbarer Zone.

3. Das Identitätsdokument gemäß Anspruch 1, wobei die Abmessungen des interessierenden Bereichs den Abmessungen einer gesamten Seite des Identitätsdokuments (600) entsprechen.

4. Ausweisdokument mit einer visuellen Darstellung (605) von codierten Daten, wobei die codierten Daten Daten zum Bestimmen der Abmessungen eines interessierenden Bereichs des Ausweisdokuments (600) sind, wobei sich der interessierende Bereich von der visuellen Darstellung unterscheidet, **dadurch gekennzeichnet, dass** die Daten zum Bestimmen einer Position des interessierenden Bereichs einen Abstand zwischen einem Punkt dieses interessierenden Bereichs und dem Referenzpunkt der visuellen Darstellung (605), insbesondere den Referenzpunkt, der dem Pixel oben links der visuellen Darstellung (605) oder dem Schwerpunkt der visuellen Darstellung (605) entspricht.

5. Ein computergestütztes Verfahren zur Verarbeitung eines interessierenden Bereichs eines Identitätsdokuments, wobei das Verfahren von einer Erfassungsvorrichtung implementiert wird und umfasst:
- Erhalten (S710) eines digitalen Bildes des Ausweisdokuments;
- Erkennen (S720) einer visuellen Darstellung codierter Daten, wobei die visuelle Darstellung auf dem Ausweisdokument angezeigt wird;
- Decodieren (S730) von Daten, die durch die visuelle Darstellung codiert sind;
- Bestimmen (S740) einer Position mindestens eines Teils der Umrisse eines interessierenden Bereichs des Ausweisdokuments als Funktion der entschlüsselten Daten, wobei sich der interessierende Bereich von der visuellen Darstellung unterscheidet; und
- Verarbeiten (S750) des interessierenden Bereichs
wobei die codierten Daten Abmessungen des Bereichs von Interesse und Daten zum Bestimmen einer Position des Bereichs von Interesse relativ zu mindestens einem Referenzpunkt der visuellen Darstellung (605) umfassen, wobei die Position der mindestens einen Teile der Umrisse des Bereichs von Interesse als Funktion der Abmessungen und der relativen Position bestimmt wird.

6. Verfahren nach Anspruch 5, wobei die Position zumindest von Teilen der Umrisse relativ zu mindestens einem Referenzpunkt der visuellen Darstellung (605) bestimmt wird.

7. Verfahren nach Anspruch 5, wobei die codierten Daten einen Verweis auf ein vorbestimmtes Format enthalten und der Bestimmungsschritt umfasst:
- , der eine Anfrage an einen Remote-Server sendet, um die Abmessungen des interessierenden Bereichs und Daten zur Bestimmung einer Position des interessierenden Bereichs relativ zu mindestens einem Referenzpunkt der visuellen Darstellung zu erhalten (605), wobei die Anfrage die in der visuellen Darstellung codierte Referenz umfasst;
- Empfangen der Abmessungen des interessierenden Bereichs und von Daten zum Bestimmen der Position des interessierenden Bereichs relativ zu mindestens einem Referenzpunkt der visuellen Darstellung (605) vom Remote-Server; und
- Lokalisieren des Bereichs von Interesse in dem erhaltenen digitalen Bild als Funktion der empfangenen Abmessungen und der relativen Position.

8. Verfahren nach Anspruch 5,
wobei der Bereich von Interesse und die visuelle Darstellung (605) rechteckig sind und parallele Umrisse erhalten, wobei die codierten Daten umfassen:
- Abmessungen der visuellen Darstellung;
- einen Abstand zwischen jedem Umriss des interessierenden Bereichs und mindestens einem Referenzpunkt der visuellen Darstellung;
wobei die Position der mindestens einen Teile der Umrisse des interessierenden Bereichs als Funktion der Abmessungen und der relativen Abstände bestimmt wird.

9. Verfahren nach Anspruch 5, wobei die codierten Daten Abmessungen der visuellen Darstellung (605) umfassen, wobei das Verfahren ferner das Bestimmen der Auflösung der visuellen Darstellung als Funktion der Abmessungen und einer erfassten Pixelabmessung umfasst.

10. Verfahren nach Anspruch 5, wobei der Verarbeitungsschritt (S750) das Speichern des interessierenden Bereichs in einer elektronischen Kartenbrieftasche umfasst.

11. Verfahren nach Anspruch 5, wobei der Verarbeitungsschritt (S750) umfasst Bestimmen, ob das Identitätsdokument eine echte Kopie ist oder nicht, indem mindestens ein Teil des interessierenden Bereichs segmentiert wird.

12. Verfahren nach Anspruch 5, wobei der Verarbeitungsschritt (S750) umfasst, dass bestimmt wird, ob die Person, die sich registrieren möchte, der Inhaber des Ausweises ist, indem
- Erfassen biometrischer Daten des Inhabers des Ausweisdokuments; und
- Vergleichen der erfassten biometrischen Daten mit einer digitalen Version der biometrischen Daten, die in einem eingebetteten elektronischen Mikroprozessorchip des Ausweisdokuments gespeichert sind, oder mit einer auf dem Ausweisdokument angezeigten Version.

13. Verfahren nach Anspruch 12, wobei das Erfassen biometrischer Daten mindestens eines der folgenden Schritte umfasst:
- Aufforderung der Person, ihr eigenes Gesicht mit einer Kamera des Erfassungsgeräts aufzunehmen;
- Aufforderung der Person, ihre Fingerspitze auf einen Sensor des Erfassungsgeräts zu drücken, damit ein Fingerabdruck von mindestens einem der Finger erfasst werden kann; oder
- Durchführung eines Netzhautscans, indem die Person aufgefordert wird, in ein Iris-, Netzhaut- oder Augenscangerät zu blicken.

14. Verfahren nach Anspruch 5, wobei der Verarbeitungsschritt (S750) umfasst, dass bestimmt wird, ob die Person, die sich registrieren möchte, der Inhaber des Ausweisdokuments ist oder nicht, indem:
- Konfigurieren eines Touchscreens des Erfassungsgeräts zum Erfassen einer Unterschrift;
- die Person auffordert, ihre Unterschrift auf dem Touchscreen auszuführen; und
- Vergleichen der soeben geleisteten Unterschrift mit einer digitalen Version der Unterschrift, die zuvor in einem elektronischen Mikroprozessorchip des Ausweisdokuments gespeichert oder auf dem Ausweisdokument angezeigt wurde.

15. Verfahren nach Anspruch 5, wobei der Verarbeitungsschritt (S750) umfasst:
- Feststellen, ob die Person, die sich registrieren möchte, der Inhaber des Ausweisdokuments ist; und wenn ja,
- Erzeugen einer beglaubigten elektronischen Version des Ausweises der Person.

16. Vorrichtung zum Erfassen eines Ausweisdokuments (600), umfassend:
- eine Kamera zum Erfassen von Bildern;
- mindestens einen Prozessor; und
- einen Speicher, der ein Programm enthält, das ein Verfahren zur Verarbeitung eines Interessensbereich eines Ausweisdokuments, wobei das Verfahren umfasst:
- Erfassen (S710) eines digitalen Bildes des Ausweisdokuments;
- Erkennen (S720) einer visuellen Darstellung der verschlüsselten Daten, wobei die visuelle Darstellung auf dem Ausweisdokument angezeigt wird;
- Decodieren (S730) der durch die visuelle Darstellung codierten Daten;
- Bestimmen (S740) einer Position mindestens eines Teils der Umrisse eines interessierenden Bereichs des Ausweisdokuments als Funktion der entschlüsselten Daten, wobei sich der interessierende Bereich von der visuellen Darstellung unterscheidet; und
- s Verarbeiten (S750) des interessierenden Bereichs;
wobei die codierten Daten Abmessungen des interessierenden Bereichs und Daten zum Bestimmen einer Position des interessierenden Bereichs relativ zu mindestens einem Referenzpunkt der visuellen Darstellung (605) umfassen, wobei die Position der mindestens einen Teile der Umrisse des interessierenden Bereichs bestimmt wird als
eine Funktion der Abmessungen und der relativen Lage.

17. Ein Computerprogramm, das bei Ausführung durch ein Gerät bewirkt, dass das Gerät ein Verfahren zur Verarbeitung eines interessierenden Bereichs eines Ausweisdokuments ausführt, wobei das Verfahren umfasst:
- Erhalten (S710) eines digitalen Bildes des Ausweisdokuments;
- Erkennen (S720) einer visuellen Darstellung codierter Daten, wobei die visuelle Darstellung auf dem Ausweisdokument angezeigt wird;
- Decodieren (S730) von Daten, die durch die visuelle Darstellung codiert sind;
- Bestimmen (S740) einer Position mindestens eines Teils der Umrisse eines Interessensbereich des Ausweisdokuments als Funktion der decodierten Daten, wobei sich der Interessensbereich von der visuellen Darstellung unterscheidet; und
- sverarbeitung (S750) des interessierenden Bereichs;
wobei die codierten Daten die Abmessungen des interessierenden Bereichs und Daten zum Bestimmen einer Position des interessierenden Bereichs relativ zu mindestens einem Referenzpunkt der visuellen Darstellung (605) umfassen, wobei die Position der mindestens einen Teile der Umrisse des interessierenden Bereichs als Funktion der Abmessungen und der relativen Position bestimmt wird.

18. Nicht-transitorisches, computerlesbares Medium, das ein Programm speichert, das, wenn es von einem Mikroprozessor oder Computersystem ausgeführt wird, den Mikroprozessor oder das Computersystem veranlasst, ein Verfahren zur Verarbeitung eines interessierenden Bereichs eines Ausweisdokuments durchzuführen, wobei das Verfahren umfasst:
- Erhalten (S710) eines digitalen Bildes des Ausweisdokuments;
- Erfassen (S720) einer visuellen Darstellung der codierten Daten, wobei die visuelle Darstellung auf dem Identitätsdokument angezeigt wird;
- Decodieren (S730) von Daten, die durch die visuelle Darstellung codiert sind;
- Bestimmen (S740) einer Position mindestens eines Teils der Umrisse eines interessierenden Bereichs des Ausweisdokuments als Funktion der entschlüsselten Daten, wobei sich der Bereich von Interesse von der visuellen Darstellung unterscheidet; und
- -Verarbeitung (S750) des interessierenden Bereichs
wobei die codierten Daten Abmessungen des interessierenden Bereichs und Daten zum Bestimmen eines Ortes des interessierenden Bereichs relativ zu mindestens einen Referenzpunkt der visuellen Darstellung (605), wobei die Position der mindestens Teile der Umrisse des Bereichs von Interesse als Funktion der Abmessungen und der relativen Position bestimmt wird.

## Revendications

1. Document d'identité (600) comprenant une représentation visuelle (605) de données codées, les données codées étant des données permettant de déterminer l'emplacement d'au moins une partie des contours d'une zone d'intérêt du document d'identité par rapport à au moins un point de référence de la représentation visuelle, la zone d'intérêt étant différente de la représentation visuelle, **caractérisée en ce que** les données permettant de déterminer l'emplacement de ladite zone d'intérêt comprennent une distance entre un point de cette zone d'intérêt et le point de référence de la représentation visuelle (605), en particulier le point de référence correspond au pixel supérieur gauche de la représentation visuelle (605), ou au barycentre de la représentation visuelle (605).

2. Document d'identité selon la revendication 1, dans lequel la représentation visuelle (605) des données est un code-barres unidimensionnel, bidimensionnel ou lisible par machine.

3. Le document d'identité selon la revendication 1, dans lequel les dimensions de la zone d'intérêt correspondent aux dimensions d'un côté entier du document d'identité (600).

4. Document d'identité comprenant une représentation visuelle (605) de données codées, les données codées étant des données permettant de déterminer les dimensions d'une zone d'intérêt du document d'identité (600), la zone d'intérêt étant différente de la représentation visuelle, **caractérisé en ce que** les données permettant de déterminer l'emplacement de ladite zone d'intérêt comprennent une distance entre un point de cette zone d'intérêt et le point de référence de la représentation visuelle (605), en particulier le point de référence correspond au pixel supérieur gauche de la représentation visuelle (605), ou au barycentre de la représentation visuelle (605).

5. Procédé mis en œuvre par ordinateur pour traiter une région d'intérêt d'un document d'identité, le procédé étant mis en œuvre par un dispositif de capture et comprenant :
- obtention (S710) d'une image numérique du document d'identité ;
- détection (S720) d'une représentation visuelle de données codées, la représentation visuelle étant affichée sur le document d'identité ;
- décodage (S730) des données codées par la représentation visuelle ;
- détermination (S740) d'un emplacement d'au moins une partie des contours d'une zone d'intérêt du document d'identité, en fonction des données décodées, la zone d'intérêt étant différente de la représentation visuelle ; et
- traitement (S750) de la région d'intérêt.
dans lequel les données codées comprennent les dimensions de la région d'intérêt et les données permettant de déterminer l'emplacement de la région d'intérêt par rapport à au moins un point de référence de la représentation visuelle (605), dans lequel l'emplacement de l'au moins une partie des contours de la région d'intérêt est déterminé en fonction des dimensions et de l'emplacement relatif.

6. Procédé selon la revendication 5, dans lequel l'emplacement de l' au moins une partie des contours est déterminé par rapport à au moins un point de référence de la représentation visuelle (605).

7. Procédé selon la revendication 5, dans lequel les données codées comprennent une référence à un format prédéterminé, et l'étape de détermination comprend :
- transmettre une requête à un serveur distant afin d'obtenir les dimensions de la région d'intérêt et les données permettant de déterminer l'emplacement de la région d'intérêt par rapport à au moins un point de référence de la représentation visuelle (605), la requête comprenant la référence codée dans la représentation visuelle ;
- recevoir, depuis le serveur distant, les dimensions de la région d'intérêt et les données permettant de déterminer l'emplacement de la région d'intérêt par rapport à au moins un point de référence de la représentation visuelle (605) ; et
- localiser la région d'intérêt dans l'image numérique obtenue, en fonction des
dimensions reçues et de l'emplacement relatif.

8. Procédé selon la revendication 5,
dans lequel la région d'intérêt et la représentation visuelle (605) sont rectangulaires et ont des contours parallèles, dans lequel les données codées comprennent :
- dimensions de la représentation visuelle ;
- une distance entre chaque contour de la région d'intérêt et au moins un point de référence de la représentation visuelle ;
dans lequel l'emplacement de l' au moins une partie des contours de la région d'intérêt est déterminé en fonction des dimensions et distances relatives.

9. Procédé selon la revendication 5, dans lequel les données codées comprennent les dimensions de la représentation visuelle (605), le procédé comprenant en outre la détermination de la résolution de la représentation visuelle en fonction des dimensions et d'une dimension de pixel détectée.

10. Procédé selon la revendication 5, dans lequel l'étape de traitement (S750) comprend le stockage de la région d'intérêt dans un portefeuille électronique.

11. Procédé selon la revendication 5, dans lequel l'étape de traitement (S750) comprend déterminer si le document d'identité est une copie authentique ou non en segmentant au moins une partie de la région d'intérêt.

12. Procédé selon la revendication 5, dans lequel l'étape de traitement (S750) comprend la détermination du fait que la personne qui tente de s'inscrire est le titulaire du document d'identité ou non en :
- collectant une donnée biométrique auprès du titulaire du document d'identité ; et
- comparant les données biométriques collectées à une version numérique des données biométriques stockées dans une puce électronique intégrée au document d'identité, ou à une version affichée sur le document d'identité.

13. Procédé selon la revendication 12, dans lequel la collecte d'une donnée biométrique comprend au moins l'une des opérations suivantes :
- demander à la personne de capturer son propre visage à l'aide d'une caméra du dispositif de capture ;
- inviter la personne à appuyer son doigt sur un capteur du dispositif de capture, afin qu'une empreinte digitale d'au moins un des doigts puisse être capturée ; ou
- effectuer un scan de la rétine en invitant la personne à fixer un dispositif de scan de l'iris, de la rétine ou de l'œil.

14. Procédé selon la revendication 5, dans lequel l'étape de traitement (S750) comprend la détermination du fait que la personne qui tente de s'inscrire est ou non le titulaire du document d'identité, en :
- configurant un écran tactile du dispositif de capture pour capturer une signature ;
- demandant à la personne d'apposer sa signature sur l'écran tactile ; et
- comparant la signature fraîchement apposée à une version numérique de la signature précédemment stockée dans une puce électronique à microprocesseur du document d'identité ou affichée sur le document d'identité.

15. Procédé selon la revendication 5, dans lequel l'étape de traitement (S750) comprend :
- déterminer si la personne qui tente de s'inscrire est le titulaire du document d'identité ; et si tel est le cas,
- générer une version électronique certifiée du document d'identité de la personne.

16. Dispositif destiné à capturer un document d'identité (600) et comprenant :
- une caméra pour capturer des images ;
- au moins un processeur ; et
- une mémoire contenant un programme mettant en œuvre un procédé de traitement d'une région d'intérêt d'un document d'identité, le procédé comprenant :
- obtenir (S710) une image numérique du document d'identité ;
- détecter (S720) une représentation visuelle des données codées, la représentation visuelle étant affichée sur le document d'identité ;
- décoder (S730) les données codées par la représentation visuelle ;
- déterminer (S740) un emplacement d'au moins une partie des contours d'une zone d'intérêt du document d'identité, en fonction des données décodées, la zone d'intérêt étant différente de la représentation visuelle ; et
- traiter (S750) la région d'intérêt ;
dans lequel les données codées comprennent les dimensions de la région d'intérêt et des données pour déterminer un emplacement de la région d'intérêt par rapport à au moins un point de référence de la représentation visuelle (605), dans lequel l'emplacement d'au moins une partie des contours de la région d'intérêt est déterminé comme une fonction des dimensions et de l'emplacement relatif.

17. Programme informatique qui, lorsqu'il est exécuté par un appareil, amène l'appareil à exécuter un procédé de traitement d'une zone d'intérêt d'un document d'identité, le procédé comprenant :
- obtenir (S710) une image numérique du document d'identité ;
- détecter (S720) une représentation visuelle de données codées, la représentation visuelle étant affichée sur le document d'identité ;
- décoder (S730) les données codées par la représentation visuelle ; déterminer (S740) un emplacement d'au moins une partie des contours d'une région d'intérêt du document d'identité, en fonction des données décodées, la région d'intérêt étant différente de la représentation visuelle ; et
- traiter (S750) la zone d'intérêt ;
dans lequel les données codées comprennent les dimensions de la zone d'intérêt et des données permettant de déterminer un emplacement de la zone d'intérêt par rapport à au moins un point de référence de la représentation visuelle (605), dans lequel l'emplacement de l'au moins une partie des contours de la zone d'intérêt est déterminé en fonction des dimensions et de l'emplacement relatif.

18. Support informatique non transitoire lisible par ordinateur stockant un programme qui, lorsqu'il est exécuté par un microprocesseur ou un système informatique, amène le microprocesseur ou le système informatique à exécuter un procédé de traitement d'une zone d'intérêt d'un document d'identité, le procédé comprenant :
- obtenir (S710) une image numérique du document d'identité ;
- détecter (S720) une représentation visuelle des données codées, la représentation visuelle étant affichée sur le document d'identité ;
- décoder (S730) les données codées par la représentation visuelle ; déterminer (S740) un emplacement d'au moins une partie des contours d'une région d'intérêt du document d'identité, en fonction des données décodées, la région d'intérêt étant différente de la représentation visuelle ; et
- traiter (S750) la région d'intérêt
dans lequel les données codées comprennent les dimensions de la zone d'intérêt et des données permettant de déterminer l'emplacement de la zone d'intérêt par rapport à au moins un point de référence de la représentation visuelle (605), dans lequel l'emplacement de l'au moins une partie des contours de la région d'intérêt est déterminé en fonction des dimensions et de l'emplacement relatif.
